# EUROPÄISCHE PATENTANMELDUNG

(11) **EP 3 845 405 A1**
(43) Veröffentlichungstag der Anmeldung: **07.07.2021**
(21) Anmeldenummer: 21151028.4
(22) Anmeldetag: 11.01.2021
(51) Int. Cl.: B60J 7/20

(54) **VORRICHTUNG ZUM ABDECKEN EINES ABLAGERAUMS EINES VERDECKS EINES CABRIOLET-FAHRZEUGS MIT EINER DECKELEINRICHTUNG**

(30) Priorität: 31.12.2019 DE 102019135927
(71) Anmelder: Valmet Automotive Oy, 23500 Uusikaupunki (FI)
(72) Erfinder: Kreiling, Nils, 49080 Osnabrück (DE); Kreth, Jan-Ole, 49082 Osnabrück (DE); Hengelbrock, Jannik, 49124 Georgsmarienhütte (DE)
(74) Vertreter: Kronthaler, Schmidt & Coll.

(57) **Zusammenfassung**

Es wird eine Vorrichtung (9) zum Abdecken eines Ablageraums (10) eines Verdecks (2) eines Cabriolet-Fahrzeugs (1) vorgeschlagen, mit einer Deckeleinrichtung (8), welche mit einem Mehrgelenkmechanismus (16) karosseriefest angebunden ist, mit einer Verriegelungseinrichtung (51) und einem Verriegelungsmechanismus (40) zur Verlagerung der Verriegelungseinrichtung (51) zwischen einer Verriegelungsposition und einer Freigabeposition, mit einem ein Vorgelege bildenden Verlagerungsmechanismus (30), welcher mit einem ersten Lenker (31) und einem zweiten Lenker (32) ausgeführt ist und sowohl dem Verriegelungsmechanismus (40) als auch mit dem Mehrgelenkmechanismus (16) verbunden ist, und mit einer als Zylinder-Kolben-Einheit (60) ausgeführten Antriebseinrichtung, welche zur Verlagerung der Deckeleinrichtung (8) zwischen einer zumindest teilweise geöffneten Position und einer Schließposition sowie zum Zusammenwirken mit dem Verriegelungsmechanismus (40) mit einem ersten Endbereich (61) mit dem Verlagerungsmechanismus (30) verbunden ist. Bei Überführung der Verriegelungseinrichtung (51) von der Verriegelungsposition in die Freigabeposition verschwenkt die Zylinder-Kolben-Einheit (60) den Verlagerungsmechanismus (30) soweit, dass der Verlagerungsmechanismus (30) den Verriegelungsmechanismus in eine der Freigabeposition der Verriegelungseinrichtung (51) entsprechende Stellung bewegt und dabei eine Ausgangsstellung zum Verstellen des Mehrgelenkmechanismus (16) einnimmt.

## Beschreibung

Die Erfindung betrifft eine Vorrichtung zum Abdecken eines Ablageraums eines Verdecks eines Cabriolet-Fahrzeugs mit einer Deckeleinrichtung, einem mit einem ersten Lenker und einem zweiten Lenker ausgeführten Verlagerungsmechanismus, einer Zylinder-Kolben-Einheit, einer Verriegelungseinrichtung und einem Verriegelungsmechanismus nach der im Oberbegriff des Patentanspruches 1 näher definierten Art.

Aus der Praxis sind Cabriolet-Fahrzeuge mit offenbaren Verdecken bekannt, bei denen das Verdeck in offener Position in einem heckseitigen Ablageraum ablegbar ist. Derartige Verdecke sind beispielsweise mit einem Verdeckkastendeckel ausgeführt, der zwischen einer den Verdeckablageraum zur Ablage des Verdecks freigebenden offenen Position und einer den Verdeckablageraum abdeckenden geschlossenen Position verlagerbar sind. Um den Verdeckkastendeckel in geschlossener Position zu halten ist dabei eine Verriegelungseinrichtung vorgesehen.

Aus der DE 10 2004 023 614 B4 ist eine derartige Ausführung mit einer einen Stauraumdeckel aufweisenden Vorrichtung bekannt, wobei der Stauraumdeckel über ein Scharniergelenk karosseriefest angebunden ist. Um den Stauraumdeckel in der geschlossenen Position zu halten, weist der Stauraumdeckel einen Fangbügel auf, der in geschlossener Position des Stauraumdeckels in Eingriff mit einem Verschlussmittel ist. Das Verschlussmittel ist über zwei Hebel an einem ersten Ende einer Krafteinleitungseinheit angebunden. Mit einem zweiten Ende wirkt die Krafteinleitungseinheit mit zwei Antriebslenkers zusammen, wobei die Krafteinleitungseinheit den Stauraumdeckel über die Antriebslenker zwischen der offenen Position und der geschlossenen Position verlagert.

Eine derartige Ausführung ist hinsichtlich möglicher Anordnungspositionen der Verriegelungseinrichtung eingeschränkt, so dass diese Ausführung bei ungünstigen Bauraumbedingungen gegebenenfalls nicht einsetzbar ist.

Es ist Aufgabe der vorliegenden Erfindung, eine Vorrichtung zum Abdecken eines Ablageraums eines Verdecks eines Cabriolet-Fahrzeugs der eingangs genannten Art zu schaffen, die flexibel an vorliegende Bauraumverhältnisse anpassbar ist.

Diese Aufgabe wird mit einer Vorrichtung gemäß den Merkmalen des Patentanspruches 1 gelöst.

Es wird somit eine Vorrichtung zum Abdecken eines Ablageraums eines Verdecks eines Cabriolet-Fahrzeugs
- mit einer Deckeleinrichtung (8), welche mit einem Mehrgelenkmechanismus (16) karosseriefest angebunden ist,
- mit einer Verriegelungseinrichtung (51) und einem Verriegelungsmechanismus (40) zur Verlagerung der Verriegelungseinrichtung (51) zwischen einer die Deckeleinrichtung (8) in der geschlossenen Position haltenden Verriegelungsposition und einer eine Bewegung der Deckeleinrichtung (8) ermöglichenden Freigabeposition,
- mit einem ein Vorgelege bildenden Verlagerungsmechanismus (30), welcher mit einem ersten Lenker (31) und einem zweiten Lenker (32) ausgeführt ist und sowohl dem Verriegelungsmechanismus (40) als auch mit dem Mehrgelenkmechanismus (16) verbunden ist, und
- mit einer als Zylinder-Kolben-Einheit (60) ausgeführten Antriebseinrichtung, welche zur Verlagerung der Deckeleinrichtung (8) zwischen einer den Ablageraum (10) zumindest teilweise freigebenden offenen Position und einer den Ablageraum (10) zumindest teilweise abdeckenden geschlossenen Position sowie zum Zusammenwirken mit dem Verriegelungsmechanismus (40) mit einem ersten Endbereich (61) mit dem Verlagerungsmechanismus (30) verbunden ist, vorgesehen.

Erfindungsgemäß verschwenkt die Zylinder-Kolben-Einheit bei Überführung der Verriegelungseinrichtung von der Verriegelungsposition in die Freigabeposition den Verlagerungsmechanismus soweit, dass der Verlagerungsmechanismus den Verriegelungsmechanismus in eine der Freigabeposition der Verriegelungseinrichtung entsprechende Stellung bewegt und dabei eine Ausgangsstellung zum Verstellen des Mehrgelenkmechanismus einnimmt.

Die erfindungsgemäße Lösung ist durch die Betätigung sowohl des Verlagerungsmechanismus als auch des Verriegelungsmechanismus mittels eines Endbereichs der Zylinder-Kolben-Einheit auf einfache Weise an gegebene Bauraumverhältnisse anpassbar, wobei eine Vielzahl von Positionen für die Verriegelungseinrichtung und den Verlagerungsmechanismus zur Verfügung gestellt werden. Die erfindungsgemäße Lösung ist somit bei einer Vielzahl von Anwendungsfällen auch mit ungünstigen Bauraumsituationen implementierbar.

Sowohl zur Verlagerung der beispielsweise einen Verdeckkastendeckel darstellenden Deckeleinrichtung als auch zur Verlagerung der Verriegelungseinrichtung ist dabei vorteilhafterweise lediglich eine einzige Antriebseinrichtung erforderlich.

Die erfindungsgemäße Lösung ist derart ausgeführt, dass eine erste durch die Zylinder-Kolben-Einheit verursachte Bewegungsphase des Verlagerungsmechanismus ausgehend von einem Zustand mit geschlossener Deckeleinrichtung und geschlossener Verriegelungseinrichtung zur Überführung der Verriegelungseinrichtung von der Verriegelungsposition in einen eine Bewegung der Deckeleinrichtung ermöglichenden Zustand führt, wohingegen eine weitere Betätigung des Verlagerungsmechanismus durch die Zylinder-Kolben-Einheit in einer zweiten Bewegungsphase zur Überführung der Deckeleinrichtung von der geschlossenen Position in die offene Position führt.

Dabei kann die Verschwenkung des Verlagerungsmechanismus in der Entriegelungsphase so erfolgen, dass der Verlagerungsmechanismus eine kinematisch günstige Ausgangsstellung für die Hauptbewegung, d.h. die Deckelaufstellung mittels des Mehrgelenkmechanismus, einnimmt.

Bei der erfindungsgemäßen Lösung ist der Verriegelungsmechanismus bezüglich des Antriebs mechanisch dem Verlagerungsmechanismus nachgeschaltet. In anderen Worten wird der Verriegelungsmechanismus über den Verlagerungsmechanismus von der Zylinder-Kolben-Einheit betätigt. Die Zylinder-Kolben-Einheit greift nicht direkt an der Verriegelungseinrichtung an, so dass die Verriegelungseinrichtung zur Verlagerung der Deckeleinrichtung erforderlichen Kräfte nicht ausgesetzt ist und vorteilhaft klein dimensionierbar ist. Der Verlagerungsmechanismus ist insbesondere derart ausgelegt, dass er bei einer Bewegung der Deckeleinrichtung in einem Betriebsoptimum arbeitet, da zu dieser Bewegung ein größerer Krafteinsatz als zur Bewegung der Verriegelungseinrichtung erforderlich ist.

Der den Verriegelungsmechanismus mit dem Verlagerungsmechanismus verbindende Hebel kann bei einer vorteilhaften Ausführung als eine Art Wippe oder Umlenker ausgeführt sein, auf dem das Vorgelege gelagert ist und der den Verriegelungsmechanismus steuert. Eine Schwenkendstellung der Wippe kann dann der Entriegelungsstellung der Verriegelungseinrichtung und Ausgangsstellung des Verstellmechanismus für die anschließende Hauptbewegung entsprechen.

Um auf konstruktiv einfache Weise sicherzustellen, dass die Verriegelungseinrichtung in der Verriegelungsposition gesichert ist und eine ungewünschte Überführung der Deckeleinrichtung von der geschlossenen Position in die offene Position verhindert ist, ist der Verriegelungsmechanismus bei einer vorteilhaften Ausführung der Erfindung selbsthemmend ausgeführt. Der Verriegelungsmechanismus befindet sich in der selbsthemmenden Position, wenn die Verriegelungseinrichtung in der Verriegelungsposition und die Deckeleinrichtung geschlossen ist.

Der Verriegelungsmechanismus weist bei einer konstruktiv einfachen Ausführung der Vorrichtung zwei miteinander verbundene Hebel auf, wobei der erste Hebel mit der Verriegelungseinrichtung und der zweite Hebel mit einem Lenker des Verlagerungsmechanismus verbunden ist. Der Verriegelungsmechanismus ist insbesondere derart ausgeführt, dass er bei sich in der Verriegelungsposition befindlicher Verriegelungseinrichtung eine Übertotpunktstellung einnimmt. Der Verriegelungsmechanismus stellt insbesondere einen Zweischlag dar.

Alternativ hierzu kann der selbsthemmende Verriegelungsmechanismus auch mit einer Kulissenführung umgesetzt sein, die in einem Hebel des Verriegelungsmechanismus angeordnet ist und in der die Verriegelungseinrichtung mit einem Zapfen geführt ist.

Wenn der erste Hebel des Verriegelungsmechanismus ein Langloch bzw. eine Kulissenbahn aufweist, in dem ein mit dem zweiten Hebel verbundener Führungszapfen gelagert ist, ist eine vorteilhaft große Flexibilität einer Bewegung der Verriegelungseinrichtung im Verhältnis zu der Bewegung der Deckeleinrichtung erzielt, und die Bewegung der Verriegelungseinrichtung ist auf einfache Weise auf die Bewegung der Deckeleinrichtung abstimmbar. Bei in der Verriegelungsposition befindlicher Verriegelungseinrichtung ist die Verriegelungseinrichtung von dem Verriegelungsmechanismus mit einer die Verriegelungseinrichtung in der Verriegelungsposition haltenden Kraft beaufschlagt. Durch den in der Kulissenbahn gelagerten Führungszapfen ist es dabei ermöglicht, dass die Verriegelungseinrichtung in der ersten Bewegungsphase der Zylinder-Kolben-Einheit durch den Verriegelungsmechanismus von der Verriegelungseinrichtung in einen Freigabezustand überführt wird, in dem sich die Verriegelungseinrichtung zwar weiterhin in der Verriegelungsposition befindet, allerdings der Verriegelungsmechanismus eine Bewegung der Verriegelungseinrichtung in die Freigabeposition nicht verhindert und diese durch die Beweglichkeit des Führungszapfens in der Kulissenbahn ermöglicht ist. Eine Überführung der Verriegelungseinrichtung von der Verriegelungsposition in die Freigabeposition kann dabei durch die Bewegung der Deckeleinrichtung umgesetzt werden, so dass eine Bewegung der Verriegelungseinrichtung durch das Vorsehen der Kulissenbahn und des Führungszapfens nicht unmittelbar auf eine Bewegung der Deckeleinrichtung abgestimmt sein muss.

Es kann vorgesehen sein, dass der zweite Hebel des Verriegelungsmechanismus und die Verriegelungseinrichtung karosseriefest gelagert sind. Alternativ hierzu kann es auch vorgesehen sein, dass der zweite Hebel des Verriegelungsmechanismus und die Verriegelungseinrichtung deckelfest gelagert sind, so dass die Vorrichtung hierdurch auf einfache und flexible Weise an die vorliegenden Bauraumverhältnisse anpassbar ist.

Die Verriegelungseinrichtung ist vorzugsweise mit einem Verriegelungshaken ausgeführt, der in Eingriff mit einem Verriegelungsbolzen bringbar ist.

Der zweite Lenker des Verlagerungsmechanismus kann sowohl mit der Deckeleinrichtung verbunden oder karosseriefest angebunden sein. Hierdurch ist die Deckeleinrichtung auf konstruktiv einfache Weise zwischen der geschlossenen Position und der offenen Position verlagerbar, wobei beispielsweise neben einer weiteren karosseriefesten Anbindung in einem Gelenkpunkt oder mittels eines Scharniers oder mittels eines Mehrgelenks keine weiteren Verlagerungslenker nötig sind.

Wenn der zweite Lenker des Verlagerungsmechanismus mit dem Mehrgelenkmechanismus verbunden ist, mittels dem die Deckeleinrichtung karosseriefest angebunden ist, ist die Deckeleinrichtung auf konstruktiv einfache Weise in einer flexibel wählbaren Bewegungsbahn zwischen der geschlossenen Position und der offenen Position verlagerbar.

Der Mehrgelenkmechanismus kann dabei insbesondere als Viergelenkmechanismus oder als Siebengelenkmechanismus ausgeführt sein.

Ein dem ersten Endbereich der Zylinder-Kolben-Einheit abgewandter zweiter Endbereich der Zylinder-Kolben-Einheit kann an einem Lenker des Mehrgelenkmechanismus, an der Deckeleinrichtung oder an einer Karosserie angebunden sein. Hierdurch ist auf konstruktiv einfache Weise eine Anpassung der Vorrichtung an die im jeweiligen Anwendungsfall vorliegenden Bauraumverhältnisse möglich.

Um auf einfache Weise sicherzustellen, dass sich der Verriegelungsmechanismus bei in der Verriegelungsposition befindlicher Verriegelungseinrichtung in der selbsthemmenden Position befindet, kann eine zum Zusammenwirken mit dem Verriegelungsmechanismus vorgesehene, insbesondere als karosseriefest oder deckelfest angeordneter Anschlag ausgeführte Blockiereinrichtung vorgesehen sein, die bei einer Überführung der Deckeleinrichtung von der offenen Position in die geschlossene Position eine Endposition des Verriegelungsmechanismus bei sich in der Verriegelungsposition befindlicher Verriegelungseinrichtung definiert.

Alternativ oder zusätzlich hierzu kann eine weitere zum Zusammenwirken mit dem Verriegelungsmechanismus vorgesehene Blockiereinrichtung vorgesehen sein, die insbesondere als karosseriefest oder deckelfest angeordneter Anschlag ausgeführt ist, wobei bei einer Überführung der Deckeleinrichtung von der geschlossenen Position in die offene Position und mit der weiteren Blockiereinrichtung zusammenwirkendem Verriegelungsmechanismus eine Verlagerung des Verriegelungsmechanismus unterbunden ist und eine weitere Betätigung des Verlagerungsmechanismus durch die Zylinder-Kolben-Einheit zu einer Verlagerung der Deckeleinrichtung führt.

Um eine Überführung der Verriegelungseinrichtung von der Verriegelungsposition in Richtung der Freigabeposition zu erleichtern, kann eine Federeinrichtung vorgesehen sein, die die Verriegelungseinrichtung mit einer in Öffnungsrichtung wirkenden Kraft beaufschlagt.

Weitere Vorteile und vorteilhafte Ausführungsformen der erfindungsgemäßen Vorrichtung ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte dreidimensionale Ansicht eines Cabriolet-Fahrzeugs mit einem verlagerbaren Verdeck in der geschlossenen Position, wobei in einem Heckbereich des Cabriolet-Fahrzeugs eine einen Verdeckkastendeckel aufweisende Vorrichtung angeordnet ist, und wobei der Verdeckkastendeckel in einer einen Ablageraum abdeckenden geschlossenen Position gezeigt ist;
- Fig. 2: eine vereinfachte Seitenansicht der Vorrichtung gemäß Fig. 1 von einer ersten Seite, wobei der Verdeckkastendeckel in einer geschlossenen Position und somit einer Grundstellung und eine von einem Verriegelungsmechanismus betätigbare Verriegelungseinrichtung in einer den Verdeckkastendeckel in der geschlossenen Position haltenden Verriegelungsposition und somit ebenfalls in einer Grundstellung gezeigt ist;
- Fig. 3: eine vereinfachte Seitenansicht der Vorrichtung in der Position gemäß Fig. 2 von einer bezüglich einer Fahrzeuglängsmittelebene gegenüberliegenden zweiten Seite;
- Fig. 4: eine vereinfachte Seitenansicht der Vorrichtung gemäß Fig. 2 von der ersten Seite, wobei der Verdeckkastendeckel in einer geschlossenen Position und somit in der Grundstellung und der Verriegelungsmechanismus in einer eine Bewegung der Verriegelungseinrichtung ermöglichenden Position gezeigt ist;
- Fig. 5: eine vereinfachte Seitenansicht der Vorrichtung in der Position gemäß Fig. 4 von der zweiten Seite;
- Fig. 6: eine vereinfachte Seitenansicht der Vorrichtung gemäß Fig. 2 und Fig. 4 von der ersten Seite, wobei der Verdeckkastendeckel in einer offenen Position und der Verriegelungsmechanismus in einer Freigabeposition gezeigt ist; und
- Fig. 7: eine vereinfachte Seitenansicht der Vorrichtung in der Position gemäß Fig. 6 von der zweiten Seite.

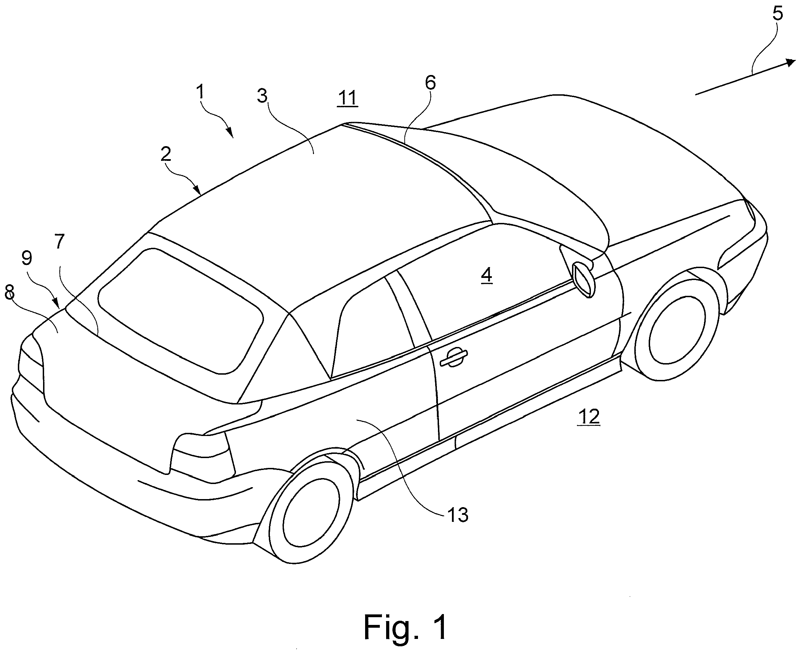

In Fig. 1 ist ein Cabriolet-Fahrzeug 1 mit einem als Soft-Top ausgeführten Verdeck 2 gezeigt. Das hier von einem Verdeckbezug 3 überspannte Verdeck 2, das auch als Hard-Top ausgeführt sein kann, ist in einer geschlossenen Position gezeigt, in der das Verdeck 2 einen Fahrgastraum 4 abdeckt. Das Verdeck 2 erstreckt sich von einem in Fahrzeugfrontrichtung 5 in einem vorderen Bereich angeordneten Windschutzscheibenrahmen 6, an dem das Verdeck 2 insbesondere mittels einer Verschlusseinrichtung verriegelbar ist, bis zu einem heckseitigen Stoffhaltebügel 7 bzw. Spannbügel, der in der geschlossenen Position an eine einen Verdecckastendeckel 8 darstellende Deckeleinrichtung einer Vorrichtung 9 grenzt. Auf dem Verdeckkastendeckel 8 liegt in geschlossener Verdeckposition insbesondere der Stoffhaltebügel 7 auf und spannt dabei den Verdeckbezug 3 in Fahrzeuglängsrichtung.

Das Verdeck 2 ist aus der in Fig. 1 gezeigten geschlossenen Position mittels eines Verdeckgestänges in eine den Fahrgastraum 4 zumindest teilweise freigebende offene Position verlagerbar, in der das Verdeck 2 in einem rückwärtigen Fahrzeugbereich vorliegend in einem von dem Verdeckkastendeckel 8 abgedeckten heckseitigen Ablageraum 10 abgelegt ist. Dieser kann bei geschlossenem Verdeck 2 insbesondere zusätzlich als Kofferraum genutzt werden.

Der Verdeckkastendeckel 8 ist zumindest zur Freigabe einer Durchtrittsöffnung für das Verdeck 2 mit einem in Fahrzeugfrontrichtung 5 vorderen Bereich aufschwenkbar. Zusätzlich kann es auch vorgesehen sein, dass der Verdeckkastendeckel 8 mit einem in Fahrzeugfrontrichtung 5 hinteren Bereich aufschwenkbar ist, um einen Zugang zu einem Kofferraum zu ermöglichen.

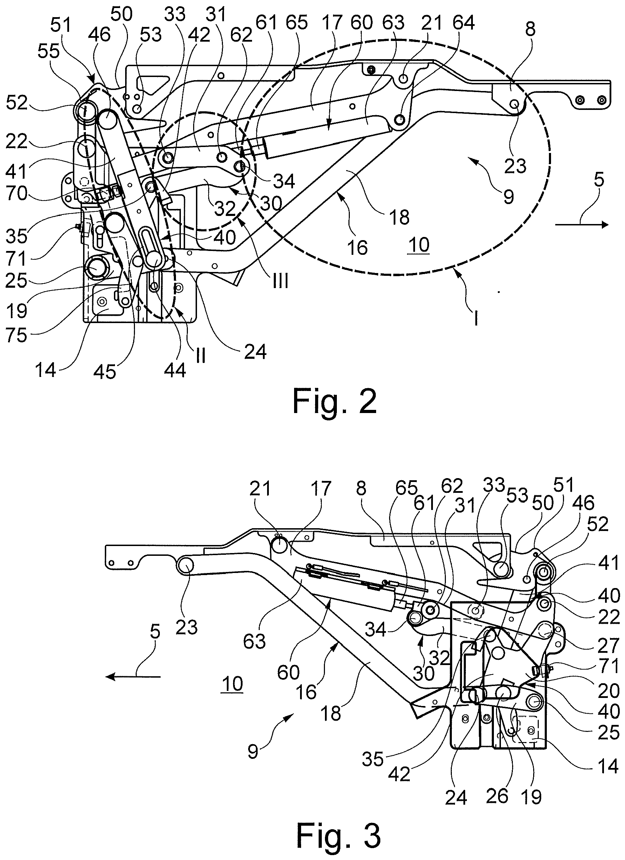

In Fig. 2 bis Fig. 7 ist die Vorrichtung 9 in Alleinstellung gezeigt, wobei die einer linken Fahrzeugseite 11 zugeordnete Vorrichtung 9 in Fig. 2, Fig. 4 und Fig. 6 von der linken Fahrzeugseite 11 und in Fig. 3, Fig. 5 und Fig. 7 von einer rechten Fahrzeugseite 12 aus betrachtet gezeigt ist. Um die einzelnen Bauteile der Vorrichtung 9 besser erkennen zu können, ist ein an einer Karosserie 13 angebundenes Lager 14 teiltransparent dargestellt.

Die Vorrichtung 9 weist neben dem Verdeckkastendeckel 8, einen hier als Siebengelenkmechanismus ausgeführten Mehrgelenkmechanismus 16 auf, mittels welchem der Verdeckkastendeckel 8 zwischen der in Fig. 1 gezeigten, den Ablageraum 10 abdeckenden geschlossenen Position und einer eine Ablagebewegung des Verdecks 2 ermöglichenden, den Ablageraum 10 freigebenden offenen Position verlagerbar ist. Der Siebengelenkmechanismus 16 weist vier Lenker 17, 18, 19 und 20 auf, von denen der erste Lenker 17 in einem ersten Gelenkpunkt 21 an dem Verdeckkastendeckel 8 und in einem zweiten Gelenkpunkt 22 an dem Lager 14 angebunden ist. Der zweite Lenker 18 ist in einem dritten Gelenkpunkt 23 an dem Verdeckkastendeckel 8 angebunden und in einem vierten Gelenkpunkt 24 mit dem dritten Lenker 19 verbunden. Der dritte Lenker 19 ist wiederum in einem fünften Gelenkpunkt 25 an das Lager 14 angebunden. Der vierte Lenker 20 ist in einem sechsten Gelenkpunkt 26 mit dem dritten Lenker 19 und in einem siebten Gelenkpunkt 27 mit dem ersten Lenker 17 verbunden. Mittels des Siebengelenkmechanismus 16 ist eine flache Verlagerungsbewegung des Verdeckkastendeckels 8 zwischen der geschlossenen Position und der offenen Position erzielbar. Alternativ hierzu kann der Mehrgelenkmechanismus auch als Viergelenkmechanismus ausgeführt sein.

Neben dem Mehrgelenkmechanismus 16, der den Hauptmechanismus bildet und symbolisch in Fig. 2 nochmals mit dem Kreis I gekennzeichnet ist, weist die Vorrichtung 9 einen Nebenmechanismus in Form eines Verrieglungsmechanismus 40 auf, welcher in Fig. 2 mit dem Kreis II symbolisiert ist. Diese Mechanismen sind durch einen ein Vorgelege bildenden Verlagerungsmechanismus 30, der in Fig. 2 mit dem Kreis III gekennzeichnet ist, verbunden und werden durch eine Antriebseinrichtung in Form einer Zylinder-Kolben-Einheit 60 angetrieben.

Der Verlagerungsmechanismus 30 ist bei dem gezeigten Ausführungsbeispiel mit genau zwei Lenkern 31, 32 ausgeführt und stellt einen Zweischlag dar. Der erste Lenker 31 des Verlagerungsmechanismus 30 ist hier in einem achten Gelenkpunkt 33 an den ersten Lenker 17 des Siebengelenkmechanismus 16 und in einem neunten Gelenkpunkt 34 an den zweiten Lenker 32 des Verlagerungsmechanismus 30 angebunden. Der zweite Lenker 32 des Verlagerungsmechanismus 30 ist in einem zehnten Gelenkpunkt 35 an den Verriegelungsmechanismus 40 angebunden, der mit einem ersten Hebel 41 und einem zweiten Hebel 42, welcher am deutlichsten in Fig. 3 zu sehen ist, ausgeführt ist.

Der in einem elften Gelenkpunkt 43 an das Lager 14 angebundene zweite Hebel 42 des Verriegelungsmechanismus 40 weist neben der Anbindung an den zweiten Lenker 32 des Verlagerungsmechanismus 30 in dem zehnten Gelenkpunkt 35 einen Zapfen 44 auf, mit dem der zweite Hebel 42 in einer hier geradlinig ausgeführten Kulissenbahn 45 bzw. einem Langloch des ersten Hebels 41 des Verriegelungsmechanismus 40 gelagert ist. Der erste Hebel 41 des Verriegelungsmechanismus 40 ist in einem der Kulissenbahn 45 abgewandten Endbereich in einem zwölften Gelenkpunkt 46 mit einer hier ein Hakenelement 50 aufweisenden Verriegelungseinrichtung 51 verbunden. Die Verriegelungseinrichtung 51 ist in einem dreizehnten Gelenkpunkt 52 drehbar an dem Lager 14 angebunden.

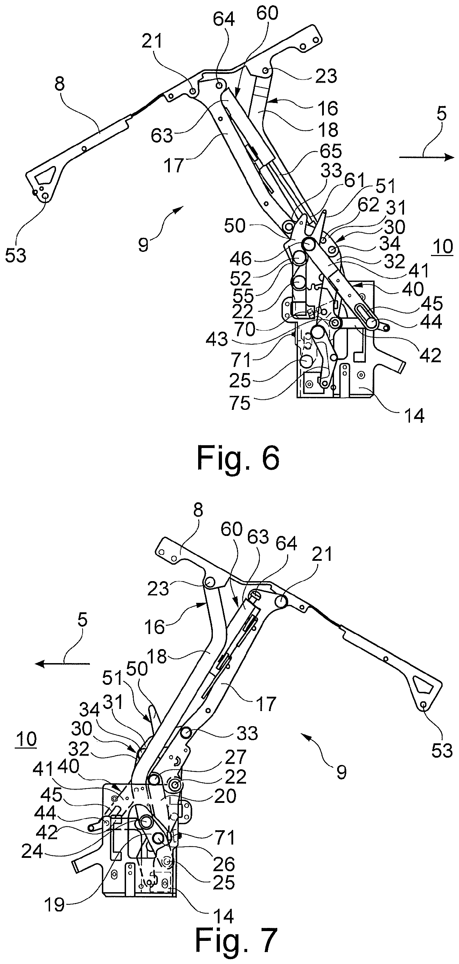

In Fig. 2 und Fig. 3 ist das Hakenelement 50 der Verriegelungseinrichtung 51 in einer Verriegelungsposition gezeigt, in der das Hakenelement 50 in Eingriff mit einem an dem Verdeckkastendeckel 8 angeordneten Bolzen 53 steht. Es ist eine Federeinrichtung 55 im Bereich des dreizehnten Gelenkpunkts 52 angeordnet, die das Hakenelement 50 mit einer in Richtung einer in Fig. 6 und Fig. 7 gezeigten Freigabeposition drückenden Kraft beaufschlagt.

Die Zylinder-Kolben-Einheit 60 ist in einem ersten Endbereich 61 in einem vierzehnten Gelenkpunkt 62 vorliegend mit dem ersten Lenker 31 des Verlagerungsmechanismus 30 und in einem zweiten Endbereich 63 in einem fünfzehnten Gelenkpunkt 64 hier mit dem ersten Lenker 17 des Siebengelenkmechanismus 16 verbunden.

An dem Lager 14 ist vorliegend eine als Anschlag 70 ausgeführte Blockiereinrichtung und eine ebenfalls als Anschlag 71 ausgeführte weitere Blockiereinrichtung angeordnet. In der geschlossenen Position des Verdeckkastendeckels 8 und bei sich in der Verriegelungsposition befindlicher Verriegelungseinrichtung 50 liegt vorliegend der erste Hebel 41 des Verriegelungsmechanismus 40 an dem Anschlag 70 an. Durch den Anschlag 70 wird eine Endposition des ersten Hebels 41 definiert und sichergestellt, dass der Verriegelungsmechanismus 40 bei sich in der Verriegelungsposition befindlicher Verriegelungseinrichtung 51 sich in einer selbsthemmenden Position befindet und vorliegend eine Übertotpunktlage einnimmt. Hierdurch ist verhindert, dass der Verdeckkastendeckel 8 durch eine auf ihn wirkende äußere Kraft in unerwünschter Weise aus der geschlossenen Position bewegbar ist.

Um den Verdeckkastendeckel 8 von der in Fig. 2 und Fig. 3 gezeigten geschlossenen Position in die in Fig. 6 und Fig. 7 gezeigte offene Position zu verlagern wird die Zylinder-Kolben-Einheit 60 derart angesteuert, dass hier ein Zylinder 65 der Zylinder-Kolben-Einheit 60 ausfährt und der erste Endbereich 61 sich von dem zweiten Endbereich 63 entfernt. Aufgrund der vorliegenden Gewichtsverhältnisse bleibt der zweite Endbereich 63 hierbei gegenüber dem Lager 14 unbewegt und der erste Endbereich 61 betätigt den Verlagerungsmechanismus 30.

Der zweite, wippenartige Hebel 42 des Verriegelungsmechanismus 40 wird hierbei um den karosseriefesten Gelenkpunkt 43 verschwenkt. Der Zapfen 44, der sich bei geschlossenem Verdeckkastendeckel 8 und in der Verriegelungsposition befindlichem Verriegelungsmechanismus 30 in der gezeigten Darstellung in einem unteren Endbereich der Kulissenbahn 45 des ersten Hebels 42 des Verriegelungsmechanismus 40 befindet und das Hakenelement 50 entgegen der Federkraft der Federeinrichtung 55 an einer Drehung um den dreizehnten Gelenkpunkt 52 hält, wird hierdurch in der Kulissenbahn 45 in Richtung eines oberen Endbereichs der Kulissenbahn 45 verlagert. Der erste Hebel 41 des Verriegelungsmechanismus 40 wird dabei bei unbewegtem Hakenelement 50 um den zwölften Gelenkpunkt 46 verschwenkt.

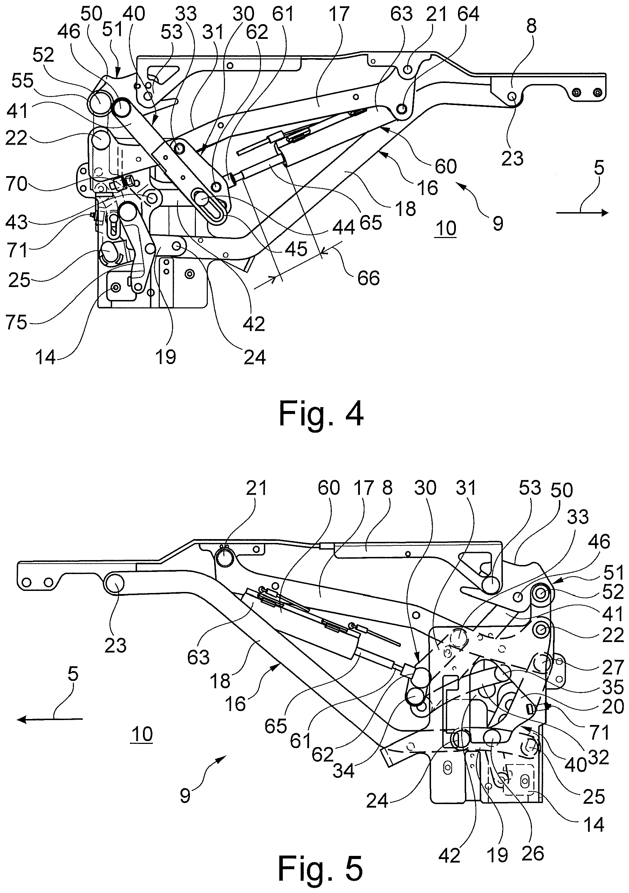

Diese erste Bewegungsphase der Zylinder-Kolben-Einheit wird abgeschlossen, wenn der zweite Hebel 42 des Verriegelungsmechanismus 40 in Anlage mit dem Anschlag 71 gelangt. Der Zylinder 65 der Zylinder-Kolben-Einheit 60 hat bis dahin einen in Fig. 4 gezeigten Teilhub 66 durchgeführt.

Bis zu diesem Zeitpunkt befindet sich der Verdeckkastendeckel 8 in der geschlossenen Position. Eine Bewegung des Hakenelements 50 ist am Ende der in Fig. 4 und Fig. 5 gezeigten ersten Bewegungsphase der Zylinder-Kolben-Einheit 60, zu dem sich der Zapfen 44 im Bereich des oberen Endbereichs der Kulissenbahn 45 befindet, durch den Verriegelungsmechanismus 40 freigegeben, wobei das Hakenelement 50 sich in einem Freigabezustand befindet, in der sich das Hakenelement 50 zwar weiterhin in der Verriegelungsposition befindet, allerdings eine Bewegung in Richtung der Freigabeposition freigegeben und nicht durch den Verriegelungsmechanismus 40 unterbunden ist. Eine durch die Federeinrichtung 55 unterstützte Drehung des Hakenelements 50 um den dreizehnten Gelenkpunkt 52 von der Verriegelungsposition in Richtung der Freigabeposition wird dabei lediglich durch den sich in der geschlossenen Position befindlichen Verdeckkastendeckel 8 unterbunden.

Betrachtet man die Kreise I, II, III der Fig. 2, welche die einzelnen Mechanismen symbolisieren, so wurde durch die Verschwenkung des Vorgeleges in Kreis III bis zu dessen Endpunkt der Verriegelungsmechanismus 40 in Kreis II betätigt und das Vorgelege in eine kinematisch vorteilhafte Position für den Antrieb des Hauptmechanismus in Kreis I verschwenkt.

Durch eine weitere Ausfahrbewegung des Zylinders 65 der Zylinder-Kolben-Einheit 60 in einer zweiten Bewegungsphase wird abgestützt auf den Verlagerungsmechanismus 30 eine Betätigung des Siebengelenkmechanismus 16 und hierdurch eine Verlagerung des Verdeckkastendeckels 8 in Richtung seiner offenen Position eingeleitet.

Hierbei wird das Hakenelement 50 unterstützt durch die Federeinrichtung 55 außer Eingriff mit dem Bolzen 53 des Verdeckkastendeckels 8 und somit von dem Freigabezustand in die tatsächliche Freigabeposition bewegt, wobei der Zapfen 44 hierbei bei ansonsten unbewegtem Verriegelungsmechanismus 40 wiederum in Richtung des unteren Endbereichs der Kulissenbahn 45 verlagert wird.

Der Zylinder 65 wird in der zweiten Bewegungsphase so weit ausgefahren, bis der Verdeckkastendeckel 8 sich in der in Fig. 6 und Fig. 7 gezeigten offenen Position befindet, in der das Verdeck 2 in dem Ablageraum ablegbar ist.

In den Figuren ist weiterhin eine Einrichtung 75 zum Notentriegeln gezeigt, mittels welcher eine Öffnung des Verdeckkastendeckels 8 auch bei einem Ausfall der Zylinder-Kolben-Einheit 60 durchführbar ist.

Bei einer Überführung des Verdeckkastendeckels 8 von der offenen Position in Richtung der geschlossenen Position laufen die oben beschriebenen Vorgänge in umgekehrter Reihenfolge ab, wobei die Verriegelungseinrichtung 51 am Ende des Vorgangs in die Verriegelungsposition überführt wird und von dem dabei in der Übertotpunktlage befindlichen Verriegelungsmechanismus 40 in dieser gehalten wird.

## Patentansprüche

1. Vorrichtung (9) zum Abdecken eines Ablageraums (10) eines Verdecks (2) eines Cabriolet-Fahrzeugs (1)
- mit einer Deckeleinrichtung (8), welche mit einem Mehrgelenkmechanismus (16) karosseriefest angebunden ist,
- mit einer Verriegelungseinrichtung (51) und einem Verriegelungsmechanismus (40) zur Verlagerung der Verriegelungseinrichtung (51) zwischen einer die Deckeleinrichtung (8) in der geschlossenen Position haltenden Verriegelungsposition und einer eine Bewegung der Deckeleinrichtung (8) ermöglichenden Freigabeposition,
- mit einem ein Vorgelege bildenden Verlagerungsmechanismus (30), welcher mit einem ersten Lenker (31) und einem zweiten Lenker (32) ausgeführt ist und sowohl dem Verriegelungsmechanismus (40) als auch mit dem Mehrgelenkmechanismus (16) verbunden ist,
- mit einer als Zylinder-Kolben-Einheit (60) ausgeführten Antriebseinrichtung, welche zur Verlagerung der Deckeleinrichtung (8) zwischen einer den Ablageraum (10) zumindest teilweise freigebenden offenen Position und einer den Ablageraum (10) zumindest teilweise abdeckenden geschlossenen Position sowie zum Zusammenwirken mit dem Verriegelungsmechanismus (40) mit einem ersten Endbereich (61) mit dem Verlagerungsmechanismus (30) verbunden ist,
**dadurch gekennzeichnet, dass** bei Überführung der Verriegelungseinrichtung (51) von der Verriegelungsposition in die Freigabeposition die Zylinder-Kolben-Einheit (60) den Verlagerungsmechanismus (30) soweit verschwenkt, dass der Verlagerungsmechanismus (30) den Verriegelungsmechanismus in eine der Freigabeposition der Verriegelungseinrichtung (51) entsprechende Stellung bewegt und dabei eine Ausgangsstellung zum Verstellen des Mehrgelenkmechanismus (16) einnimmt.

2. Vorrichtung nach Anspruch 1,
**dadurch gekennzeichnet, dass** ein den Verriegelungsmechanismus (40) mit dem Verlagerungsmechanismus (30) verbindender Hebel (42) wippenartig ausgeführt ist, wobei auf diesem Hebel (42) der Verlagerungsmechanismus (30) gelagert ist und dieser Hebel (42) den Verriegelungsmechanismus (40) steuert.

3. Vorrichtung nach Anspruch 1,
**dadurch gekennzeichnet, dass** der Verriegelungsmechanismus (40) selbsthemmend ausgeführt ist.

4. Vorrichtung nach einem der Ansprüche 1 bis 3,
**dadurch gekennzeichnet, dass** der Verriegelungsmechanismus (40) zwei miteinander verbundene Hebel (41, 42) aufweist, wobei der erste Hebel (41) mit der Verriegelungseinrichtung (51) und der zweite Hebel (42) mit einem Lenker (31) des Verlagerungsmechanismus (30) verbunden ist.

5. Vorrichtung nach Anspruch 4,
**dadurch gekennzeichnet, dass** der erste Hebel (41) des Verriegelungsmechanismus (40) ein Langloch (45) aufweist, in dem ein mit dem zweiten Hebel (42) verbundener Führungszapfen (44) gelagert ist.

6. Vorrichtung nach einem der Ansprüche 1 bis 5,
**dadurch gekennzeichnet, dass** der zweite Hebel (42) des Verriegelungsmechanismus (40) und die Verriegelungseinrichtung (51) karosseriefest gelagert sind.

7. Vorrichtung nach einem der Ansprüche 1 bis 5,
**dadurch gekennzeichnet, dass** der zweite Hebel (42) des Verriegelungsmechanismus (40) und die Verriegelungseinrichtung (51) deckelfest gelagert sind.

8. Vorrichtung nach einem der Ansprüche 1 bis 7,
**dadurch gekennzeichnet, dass** der zweite Lenker (32) des Verlagerungsmechanismus (30) mit der Deckeleinrichtung (8) verbunden oder karosseriefest angebunden ist.

9. Vorrichtung nach einem der Ansprüche 1 bis 7,
**dadurch gekennzeichnet, dass** der zweite Lenker (32) des Verlagerungsmechanismus (30) mit dem Mehrgelenkmechanismus (16) verbunden ist.

10. Vorrichtung nach einem der Ansprüche 1 bis 9,
**dadurch gekennzeichnet, dass** der Mehrgelenkmechanismus (16) als Viergelenkmechanismus oder als Siebengelenkmechanismus ausgeführt ist.

11. Vorrichtung nach einem der Ansprüche 1 bis 10,
**dadurch gekennzeichnet, dass** ein dem ersten Endbereich (61) der Zylinder-Kolben-Einheit (60) abgewandter zweiter Endbereich (63) der Zylinder-Kolben-Einheit (60) an einem Lenker (17) des Mehrgelenkmechanismus (16) angebunden ist.

12. Vorrichtung nach einem der Ansprüche 1 bis 10,
**dadurch gekennzeichnet, dass** ein dem ersten Endbereich (61) der Zylinder-Kolben-Einheit (60) abgewandter zweiter Endbereich (63) der Zylinder-Kolben-Einheit (60) an der Deckeleinrichtung (8) oder an einer Karosserie (13) angebunden ist.

13. Vorrichtung nach einem der Ansprüche 1 bis 12,
**dadurch gekennzeichnet, dass** eine zum Zusammenwirken mit dem Verriegelungsmechanismus (40) vorgesehene Blockiereinrichtung (70) vorgesehen ist, die bei einer Überführung der Deckeleinrichtung (8) von der offenen Position in die geschlossene Position eine Endposition des Verriegelungsmechanismus (40) bei sich in der Verriegelungsposition befindlicher Verriegelungseinrichtung (51) definiert.

14. Vorrichtung nach einem der Ansprüche 1 bis 13,
**dadurch gekennzeichnet, dass** eine weitere, zum Zusammenwirken mit dem Verriegelungsmechanismus (40) vorgesehene Blockiereinrichtung (72) vorgesehen ist, wobei bei einer Überführung der Deckeleinrichtung (8) von der geschlossenen Position in die offene Position und mit der weiteren Blockiereinrichtung (72) zusammenwirkendem Verriegelungsmechanismus (40) eine weitere Betätigung des Verlagerungsmechanismus (30) durch die Zylinder-Kolben-Einheit (60) zu einer Verlagerung der Deckeleinrichtung (8) führt.

15. Vorrichtung nach einem der Ansprüche 1 bis 14,
**dadurch gekennzeichnet, dass** eine Federeinrichtung (55) vorgesehen ist, die die Verriegelungseinrichtung (51) mit einer in Öffnungsrichtung wirkenden Kraft beaufschlagt.
